# FASCICULE DE BREVET EUROPEEN

(11) **EP 2 042 417 B1**
(45) Date de publication et mention de la délivrance du brevet: **29.12.2010**
(21) Numéro de dépôt: 08290183.6
(22) Date de dépôt: 27.02.2008
(51) Int. Cl.: B62J 99/00, B62K 11/14, A42B 3/30, B62J 9/00

(54) **Ensemble téléphonique de type "mains libres" pour motocycle, télécommandé au guidon**
Telefongerätekombination vom Typ Freisprechanlage für Motorrad mit Fernbedienung am Lenker
Hands-free telephone system for a motorcycle, with remote control from the handlebars

(30) Priorité: 28.09.2007 FR 0706809
(43) Date de publication de la demande: 01.04.2009
(73) Titulaire: Parrot, 75010 Paris (FR)
(72) Inventeur: Seydoux, Henri, 75017 Paris (FR); Vignau-Lous, Bertrand, 75018 Paris (FR); Mathieu, Jérôme, 75010 Paris (FR); Pinto, Guillaume, 75004 Paris (FR)
(74) Mandataire: Dupuis-Latour, Dominique

(56) Documents cités:
- DE-A1- 19 962 603
- DE-U1- 20 317 439
- FR-A- 2 677 826
- FR-A- 2 757 717
- KR-A- 20020 071 826
- US-A1- 2002 014 565
- US-A1- 2005 035 856

## Description

L'invention concerne un dispositif de télécommande sans fil pour motocycles, ainsi qu'un ensemble de type "mains libres" notamment pour commander un téléphone portable, mettant en oeuvre un tel dispositif de télécommande.

L'invention est particulièrement adaptée aux usagers d'un motocycle (motocyclette, scooter, etc.) qui veulent accéder aux différentes fonctionnalités d'un appareil électronique tel qu'un téléphone portable, un système radio/audio ou encore un interphone avec le passager.

L'invention sera plus particulièrement décrite dans le cas d'une application à la téléphonie "main libres" sans fil, mais cette application n'est pas limitative de l'invention, qui peut être utilisée pour accéder aux fonctionnalités de tout système complexe utilisé à bord d'un motocycle.

L'invention concerne en particulier les systèmes installés en "seconde monte" sur un motocycle, dont l'intégration impose des contraintes propres en termes d'ergonomie, de sécurité et de compatibilité.

Le système doit en effet pouvoir être monté sur la quasi-totalité des motocycles du marché. Il doit en outre permettre à l'utilisateur d'accéder en toute sécurité aux différentes fonctionnalités que celui-ci souhaite commander. En d'autres termes, l'utilisateur doit pouvoir accéder à ces fonctions sans quitter la route des yeux ni perdre le contrôle total qu'il peut avoir sur son véhicule. Enfin, le système doit pouvoir dissuader les tentatives de vol ou de dégradation lorsque le motocycle est en stationnement.

On connaît divers systèmes de télécommande pour motocycle, notamment pour commander les fonctions d'écoute de la radio, d'utilisation d'un téléphone portable ou d'interphonie avec le passager.

Par exemple, le DE 199 62 603 A1, en accord avec les préambules respectifs des revendications 1 et 11, décrit un système comportant une liaison sans fil entre un combiné micro/écouteur de téléphonie "mains-libres" monté sur un casque et un boîtier de télécommande au guidon. D'autres dispositifs destinés à être montés sur un guidon de motocycle sont décrits dans les US 2005/035856 A1, DE 203 17 439 U1 et US 2002/014565 A1.

Ces télécommandes sont cependant spécialisées, c'est-à-dire qu'elles sont destinées à gérer un seul système (soit le téléphone, soit l'interphone, ...). En outre, elles se révèlent en général assez malcommodes à installer et à utiliser, en raison d'une ergonomie insuffisante.

Les difficultés ci-dessus sont en outre considérablement accrues si l'on souhaite gérer à partir d'une même télécommande une pluralité de dispositifs différents, susceptibles de produire autant de signaux audio : téléphone, radio intégrée, baladeur MP3, ... : le développement d'un système complexe, embarquant un grand nombre de fonctionnalités et qui puisse s'intégrer en seconde monte sur un motocycle, implique d'offrir à l'utilisateur un nombre important de commandes différentes.

Si l'on souhaite que le boîtier principal d'un tel système puisse être positionné sur le casque de l'utilisateur (ce qui permet d'y relier aisément un microphone et des écouteurs), l'intégration de l'ensemble des commandes sur ce même boîtier de casque ne permet pas de répondre aux contraintes d'ergonomie et de sécurité exposées plus haut.

L'invention propose de remédier à ces divers inconvénients et limitations au moyen d'un nouvel ensemble de type "mains libres" pour motocycle mettant en oeuvre un dispositif de télécommande sans fil adapté.

Essentiellement, la solution proposée par l'invention repose sur l'utilisation de deux éléments séparés : un boîtier principal et un dispositif autonome de télécommande sans fil. Le boîtier principal, qui intègre les différents modules électroniques ainsi que les éléments d'acquisition et de restitution audio, constitue le coeur du système et vient se fixer sur le casque de l'utilisateur. Le dispositif de télécommande sans fil, quant à lui, permet à l'utilisateur d'accéder aux différentes fonctionnalités du boîtier principal et vient se fixer sur un élément du guidon, par exemple la poignée gauche de la moto.

Plus précisément, comme décrit par le DE 199 62 603 A1 précité, le dispositif de télécommande est contenu dans un élément autonome apte à être assujetti sur une partie de guidon du motocycle, et il est muni d'une pluralité de touches de fonction accessibles à un utilisateur et de moyens d'émission sans fil commandés sur activation de l'une des touches de fonction.

De façon caractéristique de l'invention, les moyens d'émission sans fil sont aptes à émettre un signal RF codé en fonction de la touche de fonction activée. L'élément autonome est en forme de pince élastique comprenant deux branches mobiles l'une par rapport à l'autre, chacune de ces branches présentant une forme générale allongée, courbée suivant sa plus grande dimension et présentant une concavité tournée en direction de la branche opposée, les deux branches étant réunies par une articulation pourvue de moyens élastiques de rappel sollicitant les deux branches dans le sens du rapprochement mutuel. Les deux branches sont mobiles entre : une position d'ouverture de la pince, sous l'effet d'une sollicitation externe appliquée à l'encontre des moyens élastiques de rappel, l'écartement minimal entre les deux branches permettant alors de placer la partie distale, libre, des branches de part et d'autre d'une partie de guidon du motocycle ; et une position de fermeture de la pince, où les moyens élastiques de rappel sollicitent les deux branches de manière à pincer ladite partie de guidon, pour assujettir le dispositif sur ce guidon, à proximité des doigts de l'utilisateur.

Les deux branches peuvent comprendre une branche avant, tournée vers l'utilisateur lorsque le dispositif est maintenu pincé sur le guidon, et une branche arrière opposée, une face apparente de la branche avant portant au moins certaines desdites touches de fonction.

Selon diverses caractéristiques subsidiaires avantageuses :
- la face apparente de la branche avant porte un repère tactile fixe positionné de manière prédéterminée par rapport aux touches de fonction placées sur cette face apparente ; ces touches de fonction peuvent en particulier être disposées sensiblement suivant une même direction d'ensemble et réparties en deux groupes distincts de part et d'autre dudit repère tactile fixe ;
- ces touches de fonction peuvent notamment comprendre : d'un côté du repère tactile fixe, une première touche de contrôle de radiotéléphone et une première touche de navigation, et du côté opposé une deuxième touche de contrôle de radiotéléphone et une deuxième touche de navigation ; elles sont avantageusement formées en relief et produisent un effet tactile à l'actionnement ;
- la branche arrière peut aussi porter une touche de fonction, notamment une touche de sélection de source ;
- l'une au moins des deux branches comprend un revêtement en matière antidérapante sur sa face interne apte à venir en contact avec le guidon, et présente une section droite de forme convexe dans la région de sa face interne apte à venir en contact avec le guidon ; L'invention a également pour objet un ensemble de type "mains libres" pour motocycle, comprenant un boîtier principal, adaptable de manière amovible sur un équipement tel qu'un casque, et comportant un microphone, des écouteurs, un circuit de traitement et d'amplification d'un signal audio, ainsi qu'un circuit de couplage avec un téléphone distant, et un dispositif autonome de télécommande sans fil tel qu'exposé ci-dessus.

Selon diverses caractéristiques subsidiaires avantageuses, le boîtier principal peut comprendre en outre :
- un concentrateur de sources, pour relier sélectivement ledit circuit de traitement et d'amplification à une source active sélectionnée entre ledit téléphone distant et au moins une autre source de signal radio/audio ;
- un circuit interne récepteur de radiodiffusion, le signal délivré par ce circuit récepteur étant apte à être sélectionné par le concentrateur de sources ;
- un connecteur apte à être relié à une source de signal audio externe, le signal reçu sur ce connecteur étant apte à être sélectionné par le concentrateur de sources.
Les touches de fonction du dispositif de télécommande sont alors des touches multifonction, redéfinissables en fonction de la source de signal audio sélectionnée par le concentrateur de sources du boîtier principal.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une vue générale de l'ensemble de l'invention, montrant le boîtier principal, la télécommande autonome et un téléphone couplé au boîtier principal.
La Figure 2 est une vue agrandie du dispositif de télécommande selon l'invention, montrant la manière dont ce dispositif est installé sur le guidon du motocycle, avec les différentes touches de fonction susceptibles d'être actionnées par l'utilisateur.
La Figure 3 est une vue perspective, de trois-quarts arrière, du dispositif de télécommande de la Figure 2.
La Figure 4 est une vue en coupe par un plan horizontal de la poignée et du dispositif de télécommande.
La Figure 5 est une vue agrandie correspondant au détail repéré V sur la Figure 4.
La Figure 6 est une coupe, par un plan transversal, du dispositif de télécommande des Figures 2 et 3.
La Figure 7 illustre sous forme de schéma par blocs les différents éléments fonctionnels du boîtier principal et du dispositif de télécommande.

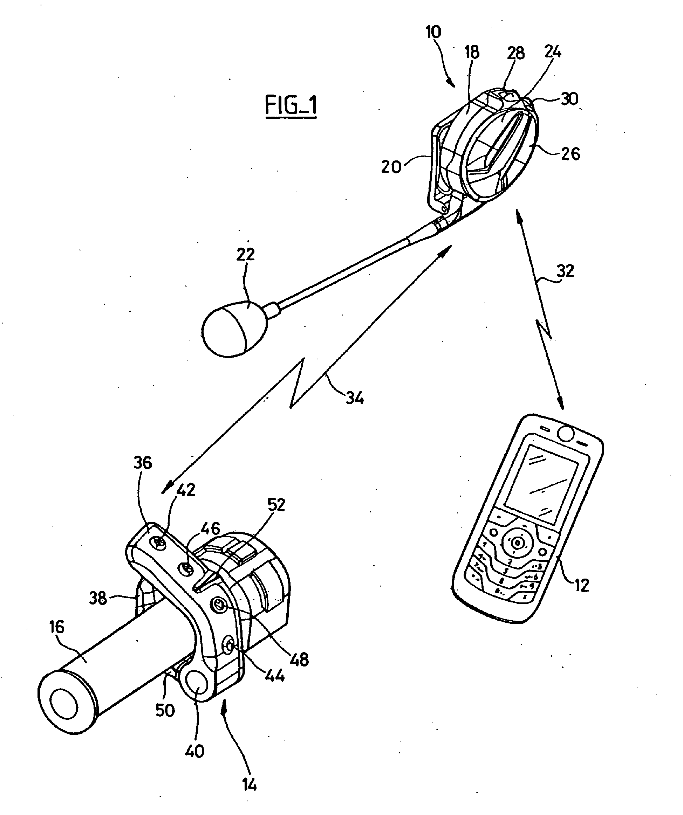

Sur la Figure 1, la référence 10 désigne le boîtier principal de l'ensemble ou "kit mains libres" selon l'invention.

Ce boîtier principal 10 comprend des moyens de couplage filaires ou, très avantageusement, sans fil avec un téléphone portable 12, par exemple via une liaison radio de type *Bluetooth* (marque déposée du Bluetooth SIG, Inc.). Les spécifications *Bluetooth* prévoient en effet la possibilité de piloter à distance par une liaison sans fil bidirectionnelle toutes les fonctions d'un téléphone portable telles que décrochage, raccrochage, numérotation, navigation dans les menus et les répertoires, etc., en prenant intégralement le contrôle à distance du téléphone portable et en se substituant entièrement au clavier de celui-ci. La présence du téléphone portable dans le rayon d'action du boîtier "mains libres" étant détectée de manière entièrement automatique, il n'est pas nécessaire pour l'utilisateur de sortir le téléphone portable, qui peut rester dans une poche de veste, dans un sac ou dans un porte-documents sans que l'utilisateur n'ait aucune manipulation à faire pour activer le boîtier. Ce dernier devient immédiatement opérationnel dès que l'utilisateur s'en approche avec son téléphone 12, toutes les commandes usuelles pouvant être exécutées via le boîtier 10 (on notera toutefois que l'invention est aussi bien applicable au cas d'une liaison filaire entre le boîtier 10 et le téléphone 12, le boîtier étant alors pourvu d'un connecteur enfichable pour assurer le couplage du téléphone à l'adaptateur.

Le boîtier principal 10 est piloté par une télécommande 14 montée de manière amovible sur un élément du guidon, par exemple sur la poignée gauche 16 du motocycle. Le choix de la poignée gauche est dicté par l'impossibilité pour l'utilisateur de se servir de sa main droite pour utiliser la télécommande, dans la mesure où cette main sert à commander l'accélérateur.

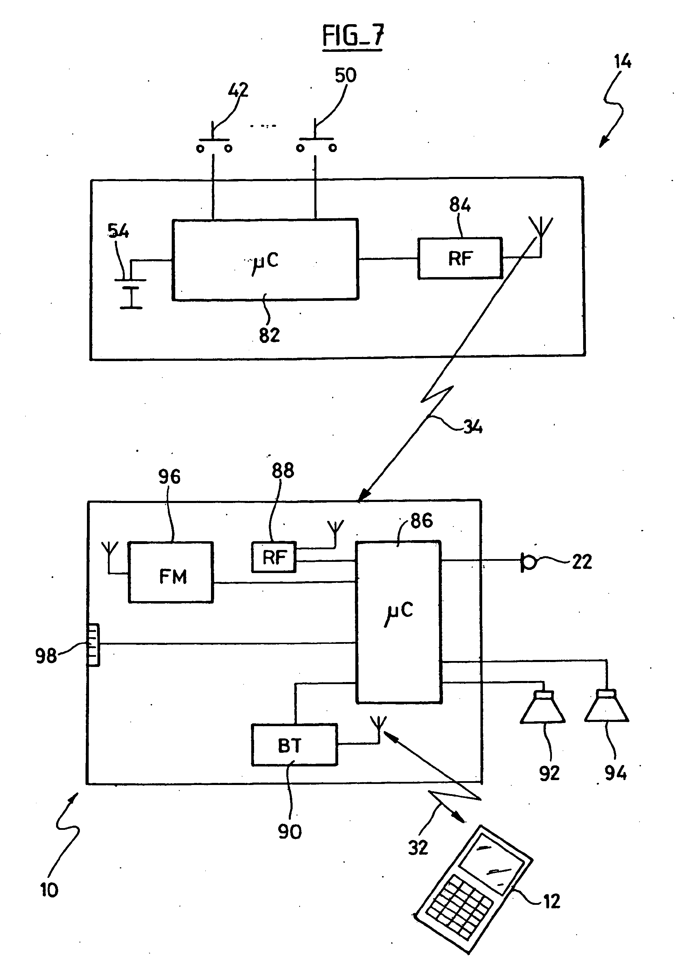

Le boîtier principal 10 comprend un bloc 18 enfermant les divers circuits électroniques (qui seront décrits plus loin en référence à la Figure 7), et il est pourvu d'un clip 20 permettant de le pincer sur le rebord du casque de l'utilisateur. Le boîtier 10 est par ailleurs relié à un microphone 22 et à des écouteurs (non représentés sur la Figure 1) pouvant être placés à l'intérieur du casque. Le boîtier 10 comprend également deux touches de commande 24, 26 (par exemple des touches de raccrochage/décrochage, marche/arrêt, etc.), ainsi que deux touches 28, 30 de réglage du volume restitué par les écouteurs.

Le boîtier principal 10 intègre des moyens pour établir, comme exposé plus haut, une première liaison sans fil, bidirectionnelle, avec le téléphone portable 12, par exemple en utilisant les protocoles et profils *Bluetooth,* ainsi que des moyens pour établir une seconde liaison sans fil 34, unidirectionnelle (en réception) avec le dispositif de télécommande 14.

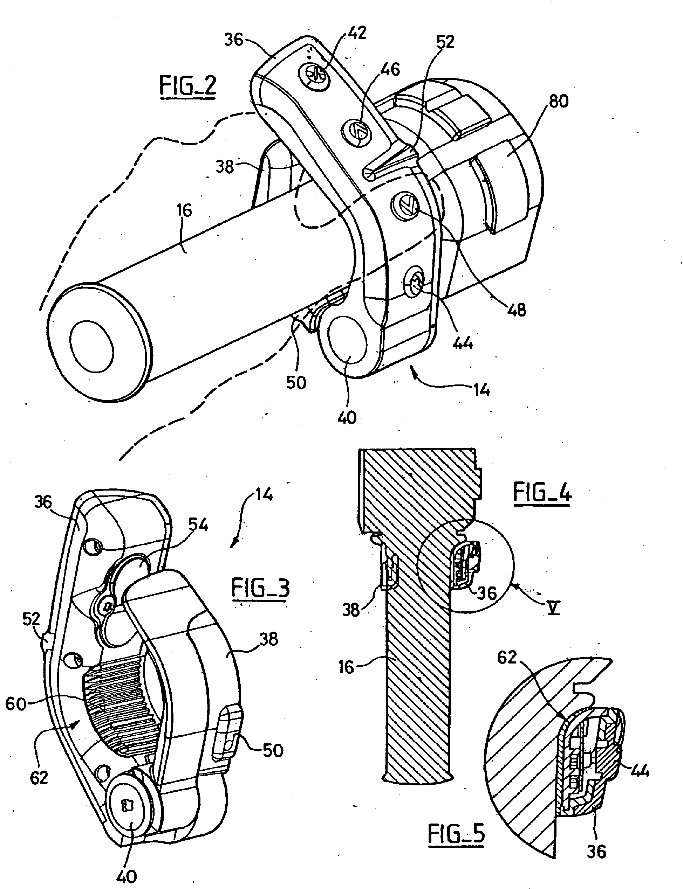

Le dispositif de télécommande 14, illustré plus en détail sur les Figures 2 à 6, est composé de deux branches 36, 38 de forme générale allongée, à savoir une branche avant 36, tournée vers l'utilisateur, et une branche opposée ou branche arrière 38. Ces deux branches sont articulées l'une par rapport à l'autre autour d'un axe commun 40 muni d'un ressort. Le système ainsi constitué, en forme de pince, peut exercer sur la poignée 16 (ou autre partie accessible du guidon) une force de serrage qui assure le maintien du dispositif 14 sur cette poignée.

La branche avant 36 porte quatre touches de fonction 42, 44, 46, 48 et la branche arrière 38, une cinquième touche 50.

Ces touches sont par exemple affectées aux les fonctions suivantes :
- touche 42 : décrochage (fonction téléphonie) ;
- touche 44 : raccrochage (fonction téléphonie) ;
- touche 46 : navigation avant dans un menu de répertoire (fonction téléphonie), station suivante (fonction radio), plage de lecture suivante (fonction source audio externe) ;
- touche 48 : navigation arrière dans un menu de répertoire (fonction téléphonie), station précédente (fonction radio), plage de lecture précédente (fonction source audio externe) ;
- touche 50 : sélection de la source ; téléphone, radio, ou bien source audio externe.

Les diverses touches sont disposées de manière que l'utilisateur puisse y accéder naturellement avec des gants sans lâcher la poignée. Les touches 42, 44, 46, 48 disposées sur la branche avant 36 sont sensiblement alignées, de manière à être accessibles avec le pouce. La touche 50 disposée sur la branche arrière est, elle, destinée à être actionnée avec l'index. Des repères tactiles sont prévus afin de permettre à l'utilisateur d'identifier facilement les différentes touches et d'y accéder sans pour autant quitter la route des yeux : il est ainsi prévu sur la branche avant un relief 52 faisant office de séparateur entre les touches 42, 46 d'une part et 44, 48 d'autre part ; par ailleurs, les touches sont formées en saillie pour être immédiatement perceptibles par le conducteur sans qu'il ait à regarder la télécommande ; les touches produisent également un effet tactile (effet de "clic") lorsqu'elles sont actionnées, de manière que l'utilisateur puisse ressentir immédiatement cet actionnement.

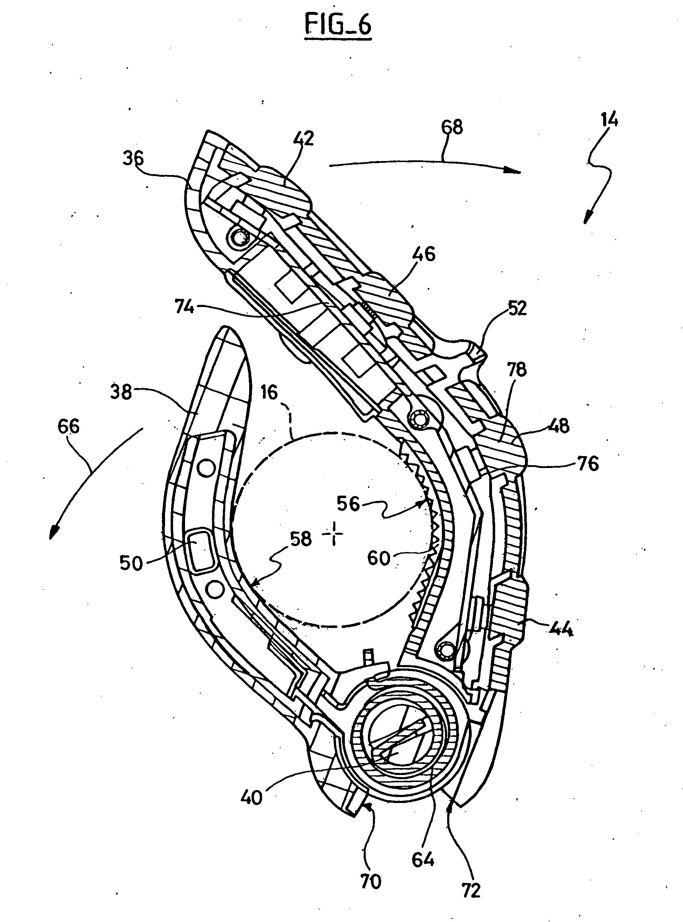

Outre le logement de piles 54 (Figure 3), les faces internes respectives 56 et 58 des branches avant 36 et arrière 38 présentent (Figures 3 et 6) une forme arrondie, concave, dont le dimensionnement est choisi pour optimiser la surface de contact avec la poignée, prenant en compte les différents diamètres et les différentes formes susceptibles d'être rencontrés d'un modèle à l'autre de moto ou de scooter. L'une au moins des faces internes est également revêtue d'un matériau rugueux et agrippant 60, par exemple un élastomère, afin d'empêcher tout phénomène de rotation ou de glissement du dispositif de télécommande autour de la poignée, notamment lors de l'appui sur les touches

On notera également (Figures 3 à 5) que la région 62 de la branche avant 36 tournée vers l'intérieur du guidon présente une forme arrondie, convexe, permettant de mieux épouser l'évasement de la poignée 16 dans cette région (voir Figure 4). Ceci permet de positionner le dispositif de télécommande 14 aussi près que possible de l'axe central du motocycle ; en effet ce dispositif, une fois monté sur la poignée, ne doit pas gêner l'accès aux commandes existantes, notamment les commandes de frein et les boutons du "commodo" 80 (commandes de clignotant, d'éclairage, etc.) qui doivent toujours pouvoir être actionnées par les doigts de l'utilisateur.

Le dispositif de télécommande est conçu pour être à la fois entièrement autonome et amovible.

À cet effet, les deux branches 36, 38 sont articulées en 40 autour d'un axe commun muni d'un ressort 64 permettant de pincer fortement le dispositif autour de la poignée 16 : l'utilisateur peut très aisément mettre en place et enlever le boîtier de télécommande avant et après chaque usage en écartant (flèches 66, 68) les deux éléments la constituant, la course étant limitée par les butées 70, 72).

Ce système de fixation permet de prévenir toute tentative de vol ou de dégradation lors d'un stationnement en extérieur. Il permet également de s'affranchir de la contrainte que constitue la variabilité des diamètres de poignées entre les différents modèles de motocycles, l'ouverture de la pince venant automatiquement s'adapter aux dimensions de la poignée.

Les différents éléments électroniques du dispositif de télécommande 14 sont montés sur un circuit souple 74 en forme de ruban allongé, portant les différents composants actifs et passifs ainsi que des contacteurs 76 placés en vis-à-vis des touches 42, 46, 48, 44 et 50. Les touches sont avantageusement moulées dans un matériau élastique 78 assurant à la fois la déformabilité et l'étanchéité recherchées.

Sur la Figure 7 on a illustré sous forme de blocs les principaux éléments fonctionnels de la télécommande 14 et du boîtier principal 10.

Le dispositif de télécommande 14 comporte essentiellement un microcontrôleur 82 relié aux contacteurs des touches 42, 44, 46, 48, 50, et à un circuit 84 émettant à destination du boîtier principal 10 un signal RF codé en fonction de celle des touches qui a été actionnée.

Le boîtier principal 10, quant à lui, est architecturé autour d'un microcontrôleur 86 relié à un circuit 88 recevant les signaux RF émis par le dispositif de télécommande 14. Le microcontrôleur est également relié à un circuit émetteur/récepteur d'interfaçage *Bluetooth* 90 permettant d'établir une liaison bidirectionnelle 32 avec le téléphone portable distant 12. Avantageusement, le boîtier 10 comporte en outre un récepteur radio FM intégré 96, ainsi qu'un connecteur 98, par exemple un connecteur audio de type "jack" ou un connecteur numérique de type Mini-USB, pour permettre un raccordement du boîtier 10 à une source extérieure telle qu'un baladeur MP3.

Les différentes sources disponibles (téléphone/radio/baladeur) pourront être sélectionnées par un simple appui sur la touche de sélection de source 50 de la télécommande, par l'index de l'utilisateur. Les touches 42 et 44 pourront être affectées aux fonctions de décrochage/raccrochage, tandis que les touches 46 et 48 seront affectées, selon la source sélectionnée, au changement de station (fonction radio), au changement de plage de lecture (fonction audio) ou bien encore à la navigation dans un menu, par exemple un menu d'un répertoire téléphonique (fonction téléphonie). Pour améliorer l'ergonomie, ces différentes fonctions pourront être assistées par des confirmations vocales et des commandes vocales. De telles fonctions peuvent être mises en oeuvre en utilisant pour le microcontrôleur 86 un processeur numérique tel que par exemple la puce P5+ de la société Parrot SA, Paris, France.

## Revendications

1. Un dispositif de télécommande sans fil pour motocycle contenu dans un élément autonome (14) apte à être assujetti sur une partie de guidon (16) du motocycle, ce dispositif étant muni d'une pluralité de touches de fonction (42-50) accessibles à un utilisateur et de moyens (84) d'émission sans fil commandés sur activation de l'une des touches de fonction, comportant des moyens (84) d'émission sans fil aptes à émettre un signal RF codé en fonction de la touche de fonction activée, **caractérisé en ce que** ledit élément autonome (14) est en forme de pince élastique comprenant deux branches (36, 38) mobiles l'une par rapport à l'autre, chacune de ces branches présentant une forme générale allongée, courbée suivant sa plus grande dimension et présentant une concavité (56, 58) tournée en direction de la branche opposée, les deux branches étant réunies par une articulation (40) pourvue de moyens élastiques de rappel (64) sollicitant les deux branches dans le sens du rapprochement mutuel, et les deux branches étant mobiles entre :
- une position d'ouverture de la pince, sous l'effet d'une sollicitation externe appliquée à l'encontre des moyens élastiques de rappel, l'écartement minimal entre les deux branches permettant alors de placer la partie distale, libre, des branches de part et d'autre de ladite partie de guidon (16) du motocycle, et
- une position de fermeture de la pince, où les moyens élastiques de rappel sollicitent les deux branches de manière à pincer ladite partie de guidon (16), pour assujettir le dispositif sur ce guidon, à proximité des doigts de l'utilisateur.

2. Le dispositif de télécommande de la revendication 1, dans lequel les deux branches comprennent une branche avant (36), tournée vers l'utilisateur lorsque le dispositif est maintenu pincé sur le guidon, et une branche arrière (38) opposée, et dans lequel une face apparente de la branche avant porte au moins certaines (42-48) desdites touches de fonction.

3. Le dispositif de télécommande de la revendication 2, dans lequel ladite face apparente de la branche avant porte en outre un repère tactile fixe (52) positionné de manière prédéterminée par rapport aux touches de fonction (42-48) placées sur cette face apparente.

4. Le dispositif de télécommande de la revendication 3, dans lequel les touches de fonction placées sur ladite face apparente de la branche avant sont disposées sur celle-ci sensiblement suivant une même direction d'ensemble et réparties en deux groupes distincts (42, 46 ; 44, 48) de part et d'autre dudit repère tactile fixe (52).

5. Le dispositif de télécommande de la revendication 4, dans lequel les touches de fonction placées sur ladite face apparente de la branche avant comprennent, d'un côté du repère tactile fixe (52), une première touche de contrôle de radiotéléphone (42) et une première touche de navigation (46), et du côté opposé une deuxième touche de contrôle de radiotéléphone (44) et une deuxième touche de navigation (48).

6. Le dispositif de télécommande de la revendication 2, dans lequel les touches de fonction placées sur ladite face apparente de la branche avant sont des touches formées en relief et produisant un effet tactile à l'actionnement.

7. Le dispositif de télécommande de la revendication 2, dans lequel la branche arrière (38) porte une touche de fonction (50).

8. Le dispositif de télécommande de la revendication 6, dans lequel la touche de fonction (50) portée par la branche arrière (38) est une touche de sélection de source.

9. Le dispositif de télécommande de la revendication 1, dans lequel au moins l'une des deux branches comprend un revêtement (60) en matière antidérapante sur sa face interne apte à venir en contact avec le guidon.

10. Le dispositif de télécommande de la revendication 1, dans lequel au moins l'une des deux branches présente une section droite de forme convexe dans la région (62) de sa face interne apte à venir en contact avec le guidon.

11. Un ensemble de type "mains libres" pour motocycle, comprenant :
- un boîtier principal (10), adaptable de manière amovible sur un équipement tel qu'un casque, et comportant un microphone (22), des écouteurs (92, 94), un circuit (86) de traitement et d'amplification d'un signal audio, ainsi qu'un circuit (90) de couplage avec un téléphone distant (12), et
- un dispositif autonome de télécommande sans fil (14),
**caractérisé en ce que** ledit dispositif autonome de télécommande sans fil (14) est un dispositif selon l'une des revendications 1 à 10.

12. L'ensemble de type "mains libres" de la revendication 11, dans lequel ledit boîtier principal comprend en outre un concentrateur de sources, pour relier sélectivement ledit circuit de traitement et d'amplification à une source active sélectionnée entre ledit téléphone distant et au moins une autre source de signal radio/audio.

13. L'ensemble de type "mains libres" de la revendication 12, dans lequel ledit boîtier principal comprend en outre un circuit interne (96) récepteur de radiodiffusion, le signal délivré par ce circuit récepteur étant apte à être sélectionné par le concentrateur de sources.

14. L'ensemble de type "mains libres" de la revendication 12, dans lequel ledit boîtier principal comprend en outre un connecteur (98) apte à être relié à une source de signal audio externe, le signal reçu sur ce connecteur étant apte à être sélectionné par le concentrateur de sources.

15. L'ensemble de type "mains libres" de la revendication 12, dans lequel les touches de fonction du dispositif de télécommande sont des touches multifonction, redéfinissablés en fonction de la source de signal audio sélectionnée par le concentrateur de sources du boîtier principal.

## Claims

1. A wireless remote-control device for a motorcycle contained in a standalone element (14) capable of being fastened to a portion of the handlebars (16) of the motorcycle, this device being furnished with a plurality of function buttons (42-50) that are accessible to a user and wireless transmission means (84) controlled on activation of one of the function buttons, comprising wireless transmission means (84) capable of transmitting an RF signal encoded as a function of the function button activated, **characterized in that** the said standalone element (14) is in the form of elastic grips comprising two branches (36, 38) that can be moved relative to one another, each of these branches having a generally elongate shape, curved along its largest dimension and having a concavity (56, 58) turned in the direction of the opposite branch, the two branches being joined by an articulation (40) provided with elastic return means (64) forcing the two branches in the direction of mutual closing, and the two branches being able to be moved between:
- an open position of the grips, under the effect of an external force applied against the elastic return means, the minimal separation between the two branches then making it possible to place the distal, free, portion of the branches on either side of the said handlebar portion (16) of the motorcycle, and
- a closed position of the grips, in which the elastic return means force the two branches so as to grip the said handlebar portion (16) in order to fasten the device to the handlebars, close to the fingers of the user.

2. The remote-control device of Claim 1, in which the two branches include a front branch (36), turned towards the user when the device is held gripped onto the handlebars, and an opposite rear branch (38), and in which an apparent face of the front branch supports at least certain (42-48) of the said function buttons.

3. The remote-control device of Claim 2, in which the said apparent face of the front branch also supports a fixed tactile reference point (52) positioned in a predetermined manner relative to the function buttons (42-48) placed on this apparent face.

4. The remote-control device of Claim 3, in which the function buttons placed on the said apparent face of the front branch are placed on the latter substantially in one and the same assembly direction and divided into two distinct groups (42, 46; 44, 48) on either side of the said fixed tactile reference point (52).

5. The remote-control device of Claim 4, in which the function buttons placed on the said apparent face of the front branch comprise, on one side of the fixed tactile reference point (52), a first radiotelephone control button (42) and a first navigation button (46), and on the opposite side a second radiotelephone control button (44) and a second navigation button (48).

6. The remote-control device of Claim 2, in which the function buttons placed on the said apparent face of the front branch are buttons formed in relief and producing a tactile actuation effect.

7. The remote-control device of Claim 2, in which the rear branch (38) supports one function button (50).

8. The remote-control device of Claim 6, in which the function button (50) supported by the rear branch (38) is a source selection button.

9. The remote-control device of Claim 1, in which at least one of the two branches comprises a covering (60) made of non-slip material on its inner face capable of coming into contact with the handlebars.

10. The remote-control device of Claim 1, in which at least one of the two branches has a cross section of convex shape in the region (62) of its inner face capable of coming into contact with the handlebars.

11. An assembly of the "hands free" type for a motorcycle, comprising:
- a main housing (10), that can be removably fitted to an item of equipment such as a helmet, and comprising a microphone (22), earphones (92, 94), a circuit (86) for processing and amplification of an audio signal, and a coupling circuit (90) for coupling with a remote telephone (12), and
- a wireless remote-control standalone device (14),
**characterized in that** the said wireless remote-control standalone device (14) is a device according to one of Claims 1 to 10.

12. The assembly of the "hands free" type of Claim 11, in which the said principal housing also comprises a source concentrator for selectively connecting the said processing and amplification circuit to an active source selected between the said remote telephone and at least one other radio/audio signal source.

13. The assembly of the "hands free" type of Claim 12, in which the said main housing also comprises an internal radio-broadcast receiver circuit (96), the signal delivered by this receiver circuit being capable of being selected by the source concentrator.

14. The assembly of the "hands free" type of Claim 12, in which the said main housing also comprises a connector (98) capable of being connected to an external audio signal source, the signal received on this connector being capable of being selected by the source concentrator.

15. The assembly of the "hands free" type of Claim 12, in which the function buttons of the remote-control device are multifunction buttons, that can be redefined depending on the audio signal source selected by the source concentrator of the main housing.

## Patentansprüche

1. Drahtlose Fernbedienungsvorrichtung für ein Motorrad, die in einem autonomen Element (14) enthalten ist, das an einem Lenkerteil (16) des Motorrads befestigt werden kann, wobei diese Vorrichtung mit mehreren einem Benutzer zugänglichen Funktionstasten (42-50) und mit drahtlosen Sendeeinrichtungen (84) versehen ist, die durch Betätigung einer der Funktionstasten gesteuert werden, die drahtlose Sendeeinrichtungen (84) aufweist, die in Abhängigkeit von der betätigten Funktionstaste ein codiertes RF-Signal senden können,
**dadurch gekennzeichnet, dass** das autonome Element (14) die Form einer elastischen Klammer hat, die zwei zueinander bewegliche Schenkel (36, 38) enthält, wobei jeder dieser Schenkel eine allgemein längliche Form hat, die gemäß seiner größten Abmessung gekrümmt ist und eine in Richtung des gegenüberliegenden Schenkels weisende Konkavität (56, 58) aufweist, wobei die zwei Schenkel durch ein Gelenk (40) miteinander verbunden sind, das mit elastischen Rückstelleinrichtungen (64) versehen ist, die die zwei Schenkel in Richtung der gegenseitigen Annäherung beanspruchen, und die zwei Schenkel beweglich sind zwischen:
- einer Öffnungsstellung der Klammer unter der Wirkung einer externen Beanspruchung, die gegen die Kraft der Rückstelleinrichtungen angewendet wird, wobei das minimale Spreizen zwischen den zwei Schenkeln es dann erlaubt, den freien distalen Bereich der Schenkel zu beiden Seiten des Lenkerteils (16) des Motorrads anzuordnen, und
- einer Schließstellung der Klammer, in der die elastischen Rückstelleinrichtungen die zwei Schenkel so beanspruchen, dass der Lenkerteil (16) umklammert wird, um die Vorrichtung an diesem Lenker in der Nähe der Finger des Benutzers zu befestigen.

2. Fernbedienungsvorrichtung nach Anspruch 1, bei der die zwei Schenkel einen vorderen Schenkel (36), der zum Benutzer weist, wenn die Vorrichtung auf den Lenker geklammert gehalten wird, und einen gegenüber liegenden hinteren Schenkel (38) enthalten, und bei der eine sichtbare Seite des vorderen Schenkels zumindest bestimmte (42-48) der Funktionstasten trägt.

3. Fernbedienungsvorrichtung nach Anspruch 2, bei der die sichtbare Seite des vorderen Schenkels außerdem eine ortsfeste taktile Markierung (52) trägt, die in vorbestimmter Weise bezüglich der Funktionstasten (42-48) positioniert ist, die auf dieser sichtbaren Seite angeordnet sind.

4. Fernbedienungsvorrichtung nach Anspruch 3, bei der die auf der sichtbaren Seite des Schenkels angeordneten Funktionstasten auf dieser im Wesentlichen in der gleichen Gesamtrichtung angeordnet und in zwei getrennten Gruppen (42, 46; 44, 48) zu beiden Seiten der ortsfesten taktilen Markierung (52) verteilt sind.

5. Fernbedienungsvorrichtung nach Anspruch 4, bei der die auf der sichtbaren Seite des vorderen Schenkels angeordneten Funktionstasten auf einer Seite der ortsfesten taktilen Markierung (52) eine erste Funktelefonsteuerungstaste (42) und eine erste Navigationstaste (46) und auf der gegenüberliegenden Seite eine zweite Funktelefonsteuerungstaste (44) und eine zweite Navigationstaste (48) enthalten.

6. Fernbedienungsvorrichtung nach Anspruch 2, bei der die auf der sichtbaren Seite des vorderen Schenkels angeordneten Funktionstasten reliefförmige Tasten sind, die bei der Betätigung eine taktile Wirkung erzeugen.

7. Fernbedienungsvorrichtung nach Anspruch 2, bei der der hintere Schenkel (38) eine Funktionstaste (50) trägt.

8. Fernbedienungsvorrichtung nach Anspruch 6, bei der die vom hinteren Schenkel (38) getragene Funktionstaste (50) eine Quellenauswahltaste ist.

9. Fernbedienungsvorrichtung nach Anspruch 1, bei der mindestens einer der zwei Schenkel eine Beschichtung (60) aus einem rutschfesten Stoff auf seiner Innenseite enthält, die mit dem Lenker in Kontakt kommen kann.

10. Fernbedienungsvorrichtung nach Anspruch 1, bei der mindestens einer der zwei Schenkel einen Querschnitt konvexer Form in dem Bereich (62) seiner Innenseite enthält, der mit dem Lenker in Kontakt kommen kann.

11. Einheit von der Art "Freisprechanlage" für ein Motorrad, die enthält:
- ein Hauptgehäuse (10), das lösbar an eine Ausrüstung wie einen Helm angepasst werden kann und ein Mikrofon (22), Kopfhörer (92, 94), eine Verarbeitungs- und Verstärkungsschaltung (86) eines Audiosignals sowie eine Kopplungsschaltung (90) mit einem fernen Telefon (12) aufweist, und
- eine autonome drahtlose Fernbedienungsvorrichtung (14),
**dadurch gekennzeichnet, dass** die autonome drahtlose Fernbedienungsvorrichtung (14) eine Vorrichtung nach einem der Ansprüche 1 bis 10 ist.

12. Einheit von der Art "Freisprechanlage" nach Anspruch 11, bei der das Hauptgehäuse außerdem einen Quellenkonzentrator enthält, um die Verarbeitungs- und Verstärkungsschaltung selektiv mit einer aktiven Quelle zu verbinden, die zwischen dem fernen Telefon und mindestens einer anderen Funk-/Audiosignalquelle ausgewählt wird.

13. Einheit von der Art "Freisprechanlage" nach Anspruch 12, bei der das Hauptgehäuse außerdem eine innere Rundfunk-Empfangsschaltung (96) enthält, wobei das von dieser Empfangsschaltung gelieferte Signal vom Quellenkonzentrator ausgewählt werden kann.

14. Einheit von der Art "Freisprechanlage" nach Anspruch 12, bei der das Hauptgehäuse außerdem einen Verbinder (98) enthält, der mit einer externen Audiosignalquelle verbunden werden kann, wobei das in diesem Verbinder empfangene Signal vom Quellenkonzentrator ausgewählt werden kann.

15. Einheit von der Art "Freisprechanlage" nach Anspruch 12, bei der die Funktionstasten der Fernbedienungsvorrichtung Multifunktionstasten sind, die in Abhängigkeit von der durch den Quellenkonzentrator des Hauptgehäuses ausgewählten Audiosignalquelle neu definiert werden können.
